(19) Europäisches Patentamt / European Patent Office / Office européen des brevets

(11) **EP 4 660 776 A1**

(12) **EUROPEAN PATENT APPLICATION**

(43) Date of publication:
**10.12.2025  Bulletin 2025/50**

(21) Application number: **25157569.2**

(22) Date of filing: **13.02.2025**

(51) International Patent Classification (IPC):
**G06F 3/12** (2006.01)    **B41J 3/407** (2006.01)
**G06F 1/26** (2006.01)

(52) Cooperative Patent Classification (CPC):
**G06F 3/1229; G06F 1/28; G06F 1/3212;
G06F 3/121; G06F 3/1273; G06F 3/1285;
G06Q 10/04; G06Q 10/06;** B41J 3/4075;
G06F 3/1251

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **07.06.2024   JP 2024093242**

(71) Applicant: **Toshiba TEC Kabushiki Kaisha
Tokyo 141-8562 (JP)**

(72) Inventor: **TAKATO, Jun
Shinagawa-ku, Tokyo, 141-8562 (JP)**

(74) Representative: **Hoffmann Eitle
Patent- und Rechtsanwälte PartmbB
Arabellastraße 30
81925 München (DE)**

(54) **SERVER AND METHOD OF CONTROLLING SERVER**

(57)  According to one embodiment, a server includes a communication unit, a storage unit, and a control unit. The communication unit communicates with a printer. The storage unit stores a first value which is the number of executed jobs per day associated with a user, and a second value which is a battery voltage consumption per job associated with the user. The control unit receives a battery voltage of the printer via the communication unit when the user logs in to the printer, predicts a printable state of the printer based on the first value, the second value, and the battery voltage, and transmits a result of the prediction to the printer via the communication unit.

*FIG. 8*

EP 4 660 776 A1

**Description**

CROSS-REFERENCE TO RELATED APPLICATION

This application is based upon and claims the benefit of priority from Japanese Patent Application No. 2024-093242, filed on June 7, 2024, the entire contents of which are incorporated herein by reference.

FIELD

Embodiments described herein relate generally to a server and a method of controlling the server.

BACKGROUND

A print management system that prevents a battery from running out in the middle of printing is known.

SUMMARY OF THE INVENTION

One of the objects of the present invention is to improve prior art techniques and overcome at least some of the prior art problems as for instance above illustrated.

According to a first aspect of the present invention, it is provided a server, comprising a communication component configured to communicate with a printer; a storage component configured to store a first value which is the number of executed print jobs per day associated with a user, and a second value which is a battery voltage consumption per print job associated with the user; and a controller configured to receive a battery voltage of the printer via the communication component when the user logs in to the printer, predict a printable state of the printer based on the first value, the second value, and the battery voltage, and transmit a result of the prediction to the printer via the communication component.

Optionally, in the server according to the first aspect of the invention, the controller receives a usage status via the communication component when the user logs out from the printer, and updates the first value and the second value.

Optionally, in the server according to the first aspect of the invention, the controller updates, as the first value, a maximum number of executed print jobs per day for a certain period for the user.

Optionally, in the server according to the first aspect of the invention, the controller receives the number of battery charge/discharge counts from the printer via the communication component when the result of the prediction indicates that printing is not possible, and transmits a message based on comparison between the number of battery charge/discharge counts and a threshold value to the printer via the communication component.

Optionally, in the server according to the first aspect of the invention, the storage component is further configured to store a usage history list for each user.

Optionally, in the server according to the first aspect of the invention, the usage history list comprises an average start voltage, an average end voltage, an average voltage difference, a number of executed print jobs, and an average voltage consumption per job.

According to a second aspect of the invention, it is provided a method of operating a printer, the method comprising storing a first value of a number of executed print jobs per day associated with a user, and a second value of a battery voltage consumption per print job associated with the user; and receiving a battery voltage of the printer when the user logs in to the printer, predicting a printable state of the printer based on the first value, the second value, and the battery voltage, and transmitting a result of the prediction to the printer.

Optionally, the method according to the second aspect of the invention further comprises receiving a usage status via the communication component when the user logs out from the printer, and updating the first value and the second value.

Optionally, the method according to the second aspect of the invention further comprises updating, as the first value, a maximum number of executed print jobs per day for a certain period for the user.

Optionally, the method according to the second aspect of the invention further comprises receiving the number of battery charge/discharge counts from the printer when the result of the prediction indicates that printing is not possible, and transmitting a message based on comparison between the number of battery charge/discharge counts and a threshold value to the printer.

Optionally, the method according to the second aspect of the invention further comprises storing a usage history list for each user.

Optionally, the method according to the second aspect of the invention further comprises the usage history list comprises an average start voltage, an average end voltage, an average voltage difference, a number of executed print jobs, and an average voltage consumption per job.

According to a third aspect of the invention, it is provided a printing system comprising a plurality of printers, a plurality of user terminals, and at least one server, the server comprises a communication component configured to communicate with the plurality of printers; a storage component configured to store a first value which is the number of executed print jobs per day associated with a user, and a second value which is a battery voltage consumption per print job associated with the user; and a controller configured to receive a battery voltage of a designated printer via the communication component when the user logs in to the designated printer, predict a printable state of the designated printer based on the first value, the second value, and the battery voltage, and transmit a result of the prediction to the designated printer via the communication component.

Optionally, in the printing system according to the third aspect of the invention, the controller receives a usage status via the communication component when the user logs out from the designated printer, and updates the first value and the second value.

Optionally, in the printing system according to the third aspect of the invention, the controller updates, as the first value, a maximum number of executed print jobs per day for a certain period for the user.

Optionally, in the printing system according to the third aspect of the invention, the controller receives the number of battery charge/discharge counts from the designated printer via the communication component when the result of the prediction indicates that printing is not possible, and transmits a message based on comparison between the number of battery charge/-discharge counts and a threshold value to the designated printer via the communication component.

Optionally, in the printing system according to the third aspect of the invention, the storage component is further configured to store a usage history list for each user.

Optionally, in the printing system according to the third aspect of the invention, the usage history list comprises an average start voltage, an average end voltage, an average voltage difference, a number of executed print jobs, and an average voltage consumption per job.

Optionally, in the printing system according to the third aspect of the invention, at least one printer is a portable device with a built-in battery.

Optionally, in the printing system according to the third aspect of the invention, each of the plurality of printers is a portable device with a built-in battery.

DESCRIPTION OF THE DRAWINGS

FIG. 1 is a block diagram showing a configuration example of a printing system according to an embodiment;
FIG. 2 is a block diagram showing a configuration example of a printer;
FIG. 3 is a block diagram showing a configuration example of a server;
FIG. 4 is a flowchart showing an example of operations of the printer;
FIG. 5 is a diagram showing an example of a printer list generated by the server;
FIG. 6 is a diagram showing an example of a usage history list generated by the server;
FIG. 7 is a diagram showing another example of the usage history list generated by the server;
FIG. 8 is a sequence diagram showing an example of operations of printable state prediction processing in the printing system;
FIG. 9 is a diagram showing an example of information displayed on the printer;

FIG. 10 is a diagram showing another example of the information displayed on the printer;
FIG. 11 is a flowchart showing an example of battery determination processing of the server; and
FIG. 12 is a diagram showing an example of a usage history list generated by a server according to a modification example.

DETAILED DESCRIPTION

An embodiment provides a server that predicts battery consumption based on a user's usage status, and a method of controlling the server.

In general, according to one embodiment, a server includes a communication unit, a storage unit, and a control unit. The communication unit communicates with a printer. The storage unit stores a first value which is the number of executed jobs per day associated with a user, and a second value which is a battery voltage consumption per job associated with the user. The control unit receives a battery voltage of the printer via the communication unit when the user logs in to the printer, predicts a printable state of the printer based on the first value, the second value, and the battery voltage, and transmits a result of the prediction to the printer via the communication unit.

Hereinafter, an embodiment will be described with reference to the drawings. In the description, components having substantially the same functions and configurations are denoted by the same reference numerals. In addition, the embodiment to be described is illustrative of the technical idea. The embodiment does not specify the materials, shapes, structures, arrangements, and the like of the components. Various modifications can be made to the embodiment.

<Configuration>

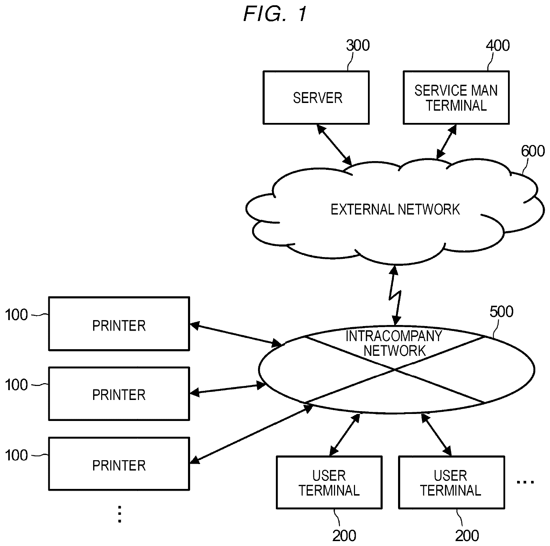

FIG. 1 is a block diagram showing a configuration example of a printing system according to the embodiment. The printing system is a system that, when a user logs in to a printer, can predict whether the printer can be maintained in a printable state until the end of a day's work. The printing system includes a plurality of printers 100, a plurality of user terminals 200, a server 300, and a service man terminal 400. An intracompany network 500 to which the printers 100 and the user terminals 200 are connected, and an external network 600 to which the server 300 and the service man terminal 400 are connected are not included in the printing system. In addition, the intracompany network 500 and the external network 600 are connected.

The printer 100 is a portable device with a built-in battery and a printing function. The printer 100 is, for example, a portable label printer. The printer 100 is connected to the intracompany network 500 and communicates with the user terminal 200 via the intracompany network 500. The printer 100 also communicates with the server 300 via the intracompany network 500 and the external network 600. The printer 100 executes a received printing job and performs printing. The printing job is a collection of information that defines a printing image, printing characters, a printing distance, and the like, and is a unit of printing. In this specification, a printing job is also simply referred to as a job. The plurality of printers 100 are each given a unique name, for example, a printer A, a printer B, a printer C, a printer D, and the like.

The user terminal 200 is a portable information processing terminal with a built-in battery, such as a personal computer or a smartphone. The user terminal 200 is connected to the intracompany network 500 and communicates with the printer 100 via the intracompany network 500. The user terminal 200 transmits a printing job to the printer 100 based on a user's operation.

The server 300 is a computer device. The server 300 is connected to the external network 600 and communicates with the printer 100 via the external network 600 and the intracompany network 500. The server 300 transmits and receives information to and from the printer 100 and transmits information to the service man terminal 400.

The service man terminal 400 is an information processing terminal such as a personal computer or a smartphone. The service man terminal 400 is connected to the external network 600 and communicates with the server 300 via the external network 600. Information on the plurality of printers 100 is displayed on the service man terminal 400.

The intracompany network 500 is a communication path that is constituted by a single or combination of communication means including, for example, wired, wireless, LAN (Local Area Network), or other unique communication networks.

The external network 600 is a communication path that is configured by a single or a combination of communication means including, for example, a wired or wireless, a LAN, the Internet, a telephone communication network, or other unique communication networks.

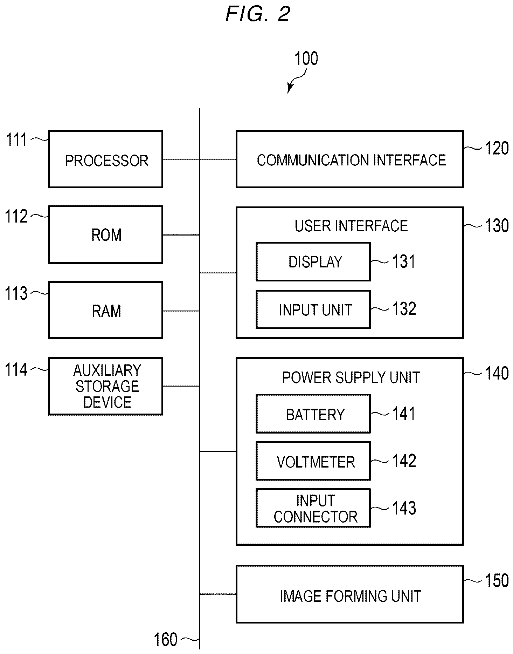

FIG. 2 is a block diagram showing a configuration example of the printer according to the embodiment. The printer 100 includes a processor 111, a read only memory (ROM) 112, a random access memory (RAM) 113, an auxiliary storage device 114, a communication interface 120, a user interface 130, a power supply unit 140, an image forming unit 150, and a system bus 160. The system bus 160 includes an address bus, a data bus, a control signal line, and the like. The system bus 160 connects the processor 111, the ROM 112, the RAM 113, the auxiliary storage device 114, the communication interface 120, the user interface 130, the power supply unit 140, and the image forming unit 150 to each other. The processor 111, the ROM 112, the RAM 113, and the auxiliary storage device 114 are connected to each other by the system bus 160 to form a computer for the printer 100.

The processor 111 corresponds to a central part of the computer. The processor 111 controls each part to realize various functions of the printer 100 in response to an operating system or an application program. The processor 111 is, for example, a central processing unit (CPU).

The ROM 112 is a non-volatile memory device. The ROM 112 stores an operating system or an application program that is set in advance, control data, and the like.

The RAM 113 is a volatile memory device. The RAM 113 is used as a work area where data is appropriately rewritten by the processor 111. The RAM 113 is also used as a buffer memory for temporarily storing data.

The auxiliary storage device 114 corresponds to an auxiliary storage part of the computer. The auxiliary storage device 114 stores data used by the processor 111 when performing various processes, data generated through processing in the processor 111, and the like. The auxiliary storage device 114 may also store the above-described application program. The auxiliary storage device 114 may be, for example, an electric erasable programmable read only memory (EEPROM) (registered trademark), a hard disk drive (HDD), a solid state drive (SSD), or the like.

The communication interface 120 is an interface for communicating with other devices connected via a network. The communication interface 120 is used for communication with external devices. The external devices include, for example, the user terminal 200 and the server 300. The communication interface 120 is constituted by, for example, a wireless module conforming to the Wi-fi (registered trademark) standard, or the like. The communication interface 120 may be one that performs wireless communication with other devices in accordance with other standards such as Bluetooth (registered trademark), or one that performs wired communication such as a LAN connector.

The user interface 130 is an interface for exchanging information with a user who operates the printer 100. The user interface 130 includes a display 131 and an input unit 132. The display 131 displays information to the user. The display 131 is, for example, a liquid crystal display. The input unit 132 receives the user's input. The input unit 132 is, for example, constituted by a plurality of buttons.

The power supply unit 140 supplies power to each part of the printer 100. The power supply unit 140 includes a battery 141, a voltmeter 142, and an input connector 143. The battery 141 stores power. The battery 141 is, for example, a lithium-ion battery. The voltmeter 142 measures the voltage of the battery 141. The voltmeter 142 is, for example, a voltage sensor. The input connector 143 is a connector that receives power from the outside of the printer 100. For example, the user charges the battery 141 by inputting power from the outside via the input connector 143.

The image forming unit 150 forms an image on printing paper. The image forming unit 150 is, for example, a thermal printing unit.

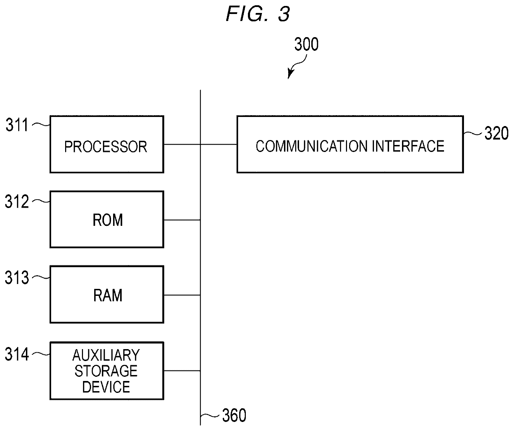

FIG. 3 is a block diagram showing a configuration example of the server according to the embodiment. The server 300 includes a processor 311, a ROM 312, a RAM 313, an auxiliary storage device 314, a communication interface 320, and a system bus 360. The system bus 360 includes an address bus, a data bus, a control signal line, and the like. The system bus 360 connects the processor 311, the ROM 312, the RAM 313, the auxiliary storage device 314, and the communication interface 320 to each other. The processor 311, the ROM 312, the RAM 313, and the auxiliary storage device 314 are connected by the system bus 360 to form a computer for the server 300.

The processor 311 corresponds to a central part of the computer. The processor 311 controls each part to realize various functions of the server 300 in response to an operating system or an application program. The processor 311 is, for example, a CPU.

The ROM 312 is a non-volatile memory device. The ROM 312 stores an operating system or an application program that is set in advance, control data, and the like.

The RAM 313 is a volatile memory device. The RAM 313 is used as a work area where data is appropriately rewritten by the processor 311. The RAM 313 is also used as a buffer memory for temporarily storing data.

The auxiliary storage device 314 corresponds to an auxiliary storage part of the computer. The auxiliary storage device 314 stores data used by the processor 311 when performing various processes, data generated through processing in the processor 311, and the like. The auxiliary storage device 314 may also store the above-described application program. The auxiliary storage device 314 is, for example, an EEPROM (registered trademark), an HDD, an SSD, or the like.

The communication interface 320 is an interface for communicating with other devices connected via a network. The communication interface 320 is used for communication with external devices. The external devices include, for example, the printer 100, the user terminal 200, and the service man terminal 400. The communication interface 320 is constituted by, for example, a LAN connector. The communication interface 320 may be configured to perform wireless communication with other devices in accordance with standards such as Bluetooth (registered trademark) or Wi-fi (registered trademark).

<Operations>

The operation of each part of the printing system according to the embodiment will be described. The printer 100 and the user terminal 200 are used in combination. For example, the user carries the printer 100 and the user terminal 200 and uses them in an environment where the user can access the intracompany network 500. The user operates the user terminal 200 to transmit a printing job to the printer 100. The user uses a printed matter, such as a label, that is output by the printer 100 when the printer 100 executes the printing job. In addition, the user logs in to the printer 100 at the start of the day's work and performs work using the printer 100 and the user terminal 200. Then, the user logs out from the printer 100 at the end of the day's work. In the following description, when it is necessary to distinguish between users, the user are distinguished from each other by being given names, such as a user A, a user B, a user C, and the like.

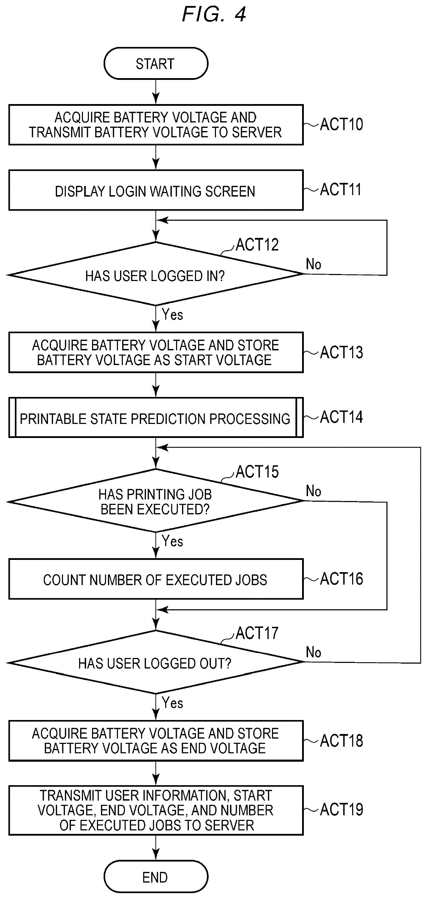

FIG. 4 is a flowchart showing an example of operations of the printer according to the embodiment. When power is supplied, the printer 100 acquires a battery voltage and transmits the battery voltage to the server (ACT10). In detail, the processor 111 of the printer 100 acquires the voltage of the battery 141 using the voltmeter 142. Then, the processor 111 controls the communication interface 120 to transmit the acquired voltage value to the server 300. The server 300 stores the received value.

The printer 100 displays a login waiting screen (ACT11). In detail, the processor 111 displays the login waiting screen on the display 131.

The printer 100 determines whether the user has logged in (ACT12). In detail, the processor 111 determines whether the user has operated the input unit 132 to log in and the login has been successful. When the user has not logged in (ACT12, No), the printer 100 repeatedly executes ACT12 and waits for the user to log in.

When the user has logged in (ACT12, Yes), the printer 100 acquires a battery voltage and stores the battery voltage as a start voltage (ACT13). In detail, the processor 111 acquires the voltage of the battery 141 using the voltmeter 142. The processor 111 then stores the acquired voltage value in the auxiliary storage device 114 as a start voltage.

The printer 100 executes printable state prediction processing (ACT14). The printable state prediction processing will be described in detail later.

The printer 100 determines whether a printing job has been executed (ACT15). In detail, the processor 111 receives the printing job via the communication interface 120 and controls the image forming unit 150 to determine whether printing has been executed. When the printing job has been executed (ACT15, Yes), the printer 100 counts the number of executed jobs (ACT16). In detail, the processor 111 counts up the number of executed jobs which indicates the number of executed printing jobs, and stores the number of executed jobs in the auxiliary storage device 114.

When the processing of ACT16 has been completed or when the printing job has not been executed in ACT15 (ACT15, No), the printer 100 determines whether it has been logged out (ACT17). In detail, the processor 111 determines whether the user has controlled the input unit 132 to log out. When the user has not logged out (ACT17, No), the printer 100 executes the processing of ACT15. In other words, the printer 100 continues to determine whether the printing job has been executed until the user logs out.

When the printer 100 is logged out (ACT17, Yes), the printer 100 acquires a battery voltage and stores the battery voltage as an end voltage (ACT18). In detail, the processor 111 acquires the voltage of the battery 141 using the voltmeter 142. The processor 111 then stores the acquired voltage value in the auxiliary storage device 114 as the end voltage.

The printer 100 transmits user information, the start voltage, the end voltage, and the number of executed jobs to the server (ACT19). In detail, the processor 111 controls the communication interface to transmit information on the user who has logged in until the logout is confirmed in ACT17, as well as the start voltage, the end voltage, and the number of executed jobs stored in the auxiliary storage device 114 to the server 300.

When the processing of ACT19 is completed, the series of processing shown in FIG. 4 ends.

The server 300 receives the information transmitted from the printers 100 and stores the received information in the auxiliary storage device 314. The server 300 then combines the received information with information generated from the received information to generate information for managing the plurality of printers 100. As information generated by the server 300, a printer list and a usage history list generated for each user will be described below.

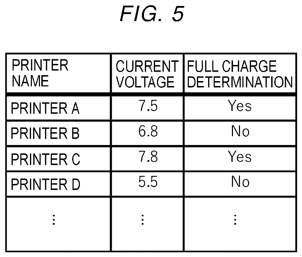

FIG. 5 is a diagram showing an example of a printer list generated by the server according to the embodiment. As shown in FIG. 5, the printer list stores the name of the printer 100, the current voltage, and a result of full charge determination for the plurality of printers 100. The current voltage corresponds to the value of a battery voltage transmitted from the printer 100 to the server 300 in ACT10 described with reference to FIG. 4. The result of full charge determination is information generated by the server 300 by comparing the current voltage with a threshold value, for example, 7.3, and determining Yes when the current voltage is equal to or greater than the threshold value and determining No when the current voltage is less than the threshold value.

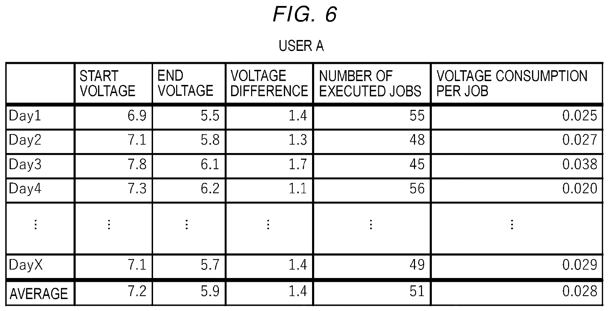

FIG. 6 is a diagram showing an example of a usage history list generated by the server according to the embodiment. As shown in FIG. 6, the usage history list for the user A stores a start voltage, an end voltage, a voltage difference, the number of executed jobs, and a voltage consumption per job for a plurality of days from Day 1 to Day X (X is, for example, 30). In addition, an average of each item is also stored. The start voltage, the end voltage, and the number of executed jobs for each day respectively correspond to the start voltage, the end voltage, and the number of executed jobs transmitted from the printer 100 to the server 300 in ACT 19 described with reference to FIG. 4. The voltage difference is a value generated by the server 300 subtracting the end voltage from the start voltage. The voltage consumption per job is a value generated by the server 300 dividing the voltage difference by the number of executed jobs. The average of each item is a value generated by the server 300 averaging the values of each item over X days. In the example shown in this embodiment, the voltage consumption per job and the average of each item are rounded off to two significant digits. Some examples of stored values include an average number of executed jobs per day of the user A being 51, and an average voltage consumption per job of the user A being 0.028.

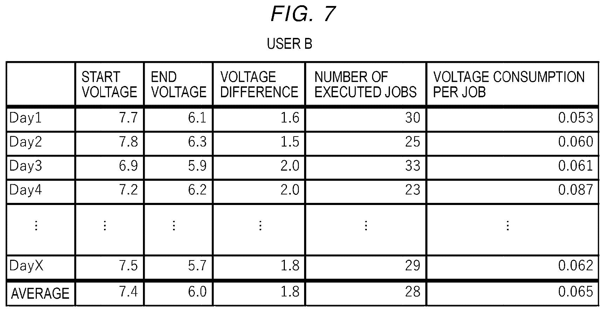

FIG. 7 is a diagram showing another example of a usage history list generated by the server according to the embodiment. As shown in FIG. 7, a usage history list for the user B stores information on the user B for the same items as in FIG. 6. Some examples of stored values include an average number of executed jobs per day of the user B being 28, and an average voltage consumption per job of the user B being 0.065.

When the printer 100 executes the processing of ACT19 described with reference to FIG. 4, the server 300 updates the usage history list. That is, the server 300 deletes any information that is no longer necessary from the usage history list, adds new information received from the printer 100, performs calculation, and updates the list to the latest state.

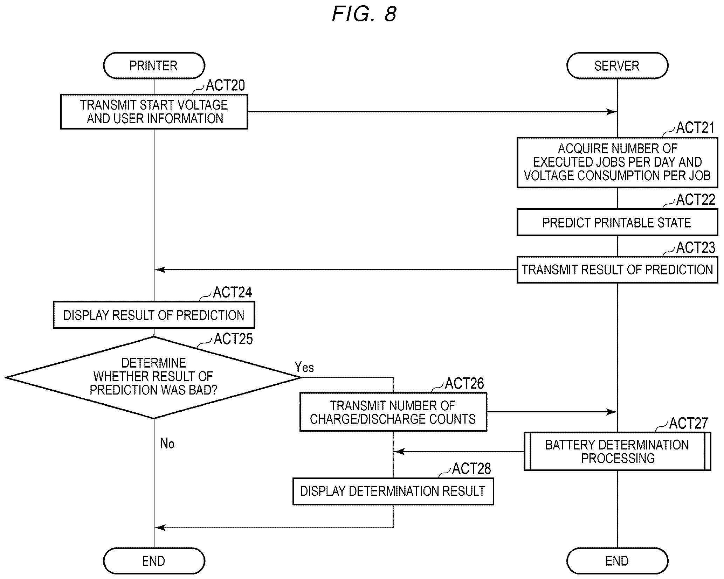

The printable state prediction processing will be described. The printable state prediction processing is executed by the printer 100 and the server 300 in cooperation. FIG. 8 is a sequence diagram showing an example of operations of the printable state prediction processing in the printing system according to the embodiment. The printer 100 transmits a start voltage and user information (ACT20). In detail, the processor 111 of the printer 100 controls the communication interface 120 so that the value of the start voltage stored in the auxiliary storage device 114 and information on a user who has currently logged in to the printer 100 are transmitted to the server 300.

The server 300 acquires the number of executed jobs per day and a voltage consumption per job (ACT21). In detail, the processor 311 of the server 300 acquires an average number of executed jobs per day, a maximum number of executed jobs per day, and an average voltage consumption per job from the usage history list of the user stored in the auxiliary storage device 314 based on the user information transmitted from the printer 100 in ACT20.

The server 300 predicts a printable state (ACT22). In detail, the processor 311 predicts whether the printer 100 can execute the maximum number of executed jobs per day based on the start voltage transmitted from the printer 100 in ACT20, the maximum number of executed jobs per day acquired in ACT21, and the average voltage consumption per job. When the start voltage is VI, a lower operating voltage limit of the printer 100 is VM (for example, 5.5), and an average voltage consumption per job is JA, the number of jobs NP estimated to be executable can be expressed by the following formula.

$$NP = (VI - VM)/JA$$

In addition, when calculating the number of jobs NP estimated to be executable, decimals are rounded down. When the number of jobs NP estimated to be executable is equal to or greater than the maximum number of executed jobs per day, it can be estimated that the printer 100 will be able to continue to run without running out of battery power even when it executes the maximum number of executed jobs per day, and the battery duration determination is "Good". On the other hand, when the number of jobs NP estimated to be executable is smaller than the maximum number of executed jobs per day, it can be estimated that the printer 100 will not be able to execute the maximum number of executed jobs per day, and the battery duration determination is "Bad".

The server 300 transmits a result of the prediction (ACT23). In detail, the processor 311 collects results of the prediction executed in ACT22 and controls the communication interface 320 so that the results are transmitted to the printer 100.

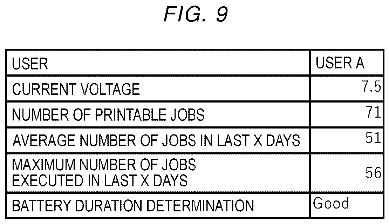

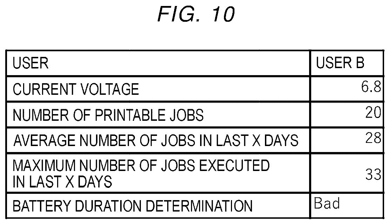

The printer 100 displays the result of the prediction (ACT24). In detail, the processor 111 of the printer 100 displays the prediction results transmitted from the server 300 in ACT23 on the display 131. An example of the display will be described with reference to FIGS. 9 and 10.

FIG. 9 is a diagram showing an example of information displayed on the printer according to the embodiment. In the example shown in FIG. 9, the display 131 of the printer 100 displays a user, a current voltage, the number of printable jobs, an average number of jobs in the last X days, a maximum number of executed jobs in the last X days, and battery duration determination. In the example shown in FIG. 9, when the user is the user A and the current voltage is 7.5, the number of printable jobs is predicted to be 71. This is a value acquired by dividing a difference of 2.0 between the current voltage, that is, the start voltage, of 7.5 and the lower operating voltage limit of 5.5 by the average voltage consumption per job of 0.028. Since the average number of jobs in the last X days is 51 and the maximum number of executed jobs in the last X days is 56 for the number of printable jobs of 71, the battery duration determination is "Good".

FIG. 10 is a diagram showing another example of information displayed on the printer according to the embodiment. In the example shown in FIG. 10, the same items as those in FIG. 9 are displayed for a case where the user is the user B. In the example shown in FIG. 10, when the user is the user B and the current voltage is 6.8, the number of printable jobs is predicted to be 20. This is a value obtained by dividing a difference of 1.3 between the current voltage, that is, the start voltage, of 6.8 and the lower operating voltage limit of 5.5 by the average voltage consumption per job of 0.065. Since the average number of jobs in the last X days is 28 and the maximum number of executed jobs in the last X days is 33 for the number of printable jobs of 20, the battery duration determination is "Bad".

Returning to the description of FIG. 8, the printer 100 determines whether the result of the prediction is Bad (ACT25). In detail, the processor 111 determines whether the battery duration determination is "Bad" among the results displayed in ACT24. When the result of the prediction is Bad (ACT25, Yes), the printer 100 transmits the number of charge/discharge counts (ACT26). In detail, the processor 111 controls the communication interface 120 so that the number of times the battery 141 has been charged/discharged up to now is transmitted to the server 300.

The server 300 executes battery determination processing (ACT27). Details of the battery determination processing will be described later. As a result of the battery determination processing, a determination result is transmitted to the printer 100.

The printer 100 displays the determination result (ACT28). In detail, the processor 111 displays the result of the battery determination processing executed in ACT27 on the display 131.

When the processing of ACT28 has been completed or when the prediction result in ACT25 is not Bad (ACT25, No), the series of processing shown in FIG. 8 ends.

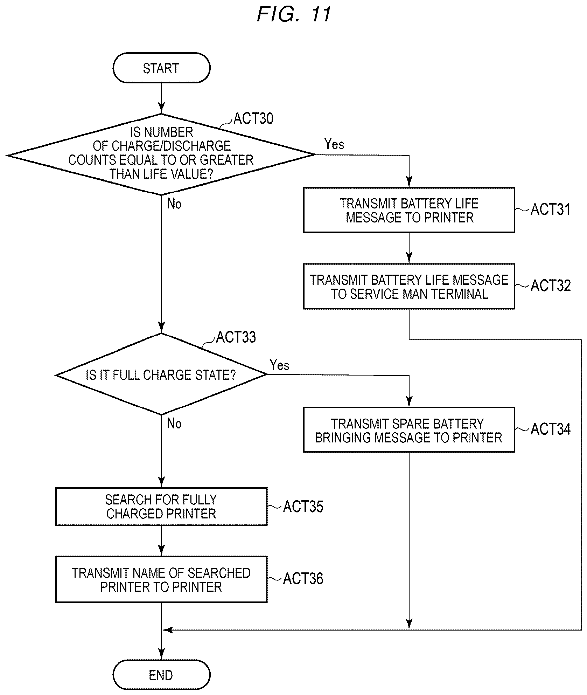

The battery determination processing will be described. FIG. 11 is a flowchart showing an example of the battery determination processing of the server according to the embodiment. The server 300 determines whether the number of charge/discharge counts is equal to or greater than a life value (ACT30). In detail, the processor 311 of the server 300 determines whether the received number of charge/discharge counts is equal to or greater than the life value, which is an indication of the battery life. When the number of charge/discharge counts is equal to or greater than the life value (ACT30, Yes), the server 300 transmits a battery life message to the printer (ACT31). In detail, the processor 311 controls the communication interface 320 so that a command is transmitted to the printer 100 to display a message for giving a notice that the battery is at the end of its life. Furthermore, the server 300 transmits the battery life message to the service man terminal (ACT32). In detail, the processor 311 controls the communication interface 320 so that a command is transmitted to the service man terminal 400 to display that the battery of the printer 100 is at the end of its life.

In ACT30, when the number of charge/-discharge counts is not equal to or greater than the life value (ACT30, No), the server 300 determines whether the battery is in a full charge state (ACT33). In detail, the processor 311 determines whether the voltage of the battery 141 is equal to or greater than a threshold value for the full charge state. When the battery is in a full charge state (ACT33, Yes), the server 300 transmits a spare battery bringing message to the printer (ACT34). In detail, the processor 311 controls the communication interface 320 so that a command is transmitted to the printer 100 to display a message for bringing a spare battery.

When it is determined in ACT33 that the battery is not in a full charge state (ACT33, No), the server 300 searches for a fully charged printer (ACT35). In detail, the processor 311 searches for a fully charged printer with reference to the printer list stored in the auxiliary storage device 314. The server 300 then transmits the name of the searched printer to the printer (ACT36). In detail, the processor 311 controls the communication interface 320 so that a command is transmitted to the printer 100 to display the name of the printer searched for in the processing of ACT35.

When the processing of ACT32, ACT34, or ACT36 is completed, the series of processing shown in FIG. 11 ends.

<Effect>

In this manner, according to the embodiment, when a user logs in to the printer 100 and executes a printing job, a usage history associated with the user is accumulated in the server 300. When the user logs in to the printer 100, the printer 100 transmits user information and a battery voltage to the server 300. Then, the server 300 predicts a printable state based on the number of executed jobs per day associated with the user, a battery voltage consumption per job associated with the user, and the received battery voltage, and transmits a result of the prediction to the printer 100. Thus, the user of the printer 100 can know whether the battery 141 of the printer 100 to which the user has currently logged in will last until the end of the day's work, through the prediction based on his or her own usage status.

The amount of battery usage of the printer 100 varies due to the influence of various factors, such as the number of times the user executes a printing job, the content of the printing job executed by the user, and the environment in which the user uses the printer 100. Even for the same one printing job, the battery consumption varies when a printing distance or the number of printing characters per job varies. In addition, the battery consumption varies depending on the temperature of the environment in which the printer 100 is used. For example, compared to 20°C to 25°C assumed at the time of design, the battery consumption increases and the number of printing jobs that can be executed decreases even the temperature is low or high. The server 300 according to the embodiment accumulates, for each user, a usage history that is different for each user, and predicts the duration of the battery 141 based on the usage history associated with the user. Thereby, the server 300 according to the embodiment can predict the duration of the battery 141 with high accuracy.

In addition, according to the embodiment, the server 300 uses a maximum number of executed jobs per day for a certain period, for example, X days, for battery duration determination. Thereby, the server 300 according to the embodiment can use the largest number of executed jobs in the user's usage history for battery duration determination, and can predict the duration of the battery 141 under stricter conditions. According to the embodiment, the display 131 of the printer 100 displays the number of printable jobs and an average number of jobs for the last X days in addition to battery duration determination of "Good" or "Bad". Thereby, the user can also predict the duration of the battery by himself or herself based on the expected work for that day and the number of printable jobs displayed on the display 131.

In addition, according to the embodiment, when the battery duration determination is "Bad", the server 300 compares the number of charge/discharge counts of the battery 141 with a life value. The server 300 transmits a message to the printer based on a result of the comparison. The message includes, for example, a message for giving a notice of the life of the battery 141, a message for recommending bringing of a spare battery, and a message for communicating the name of a fully charged printer. The service man terminal 400 is also notified that the battery 141 has reached the end of its life. Thereby, the server 300 according to the embodiment can contribute to the sales of replacement batteries and spare batteries.

<Other modification examples, etc.>

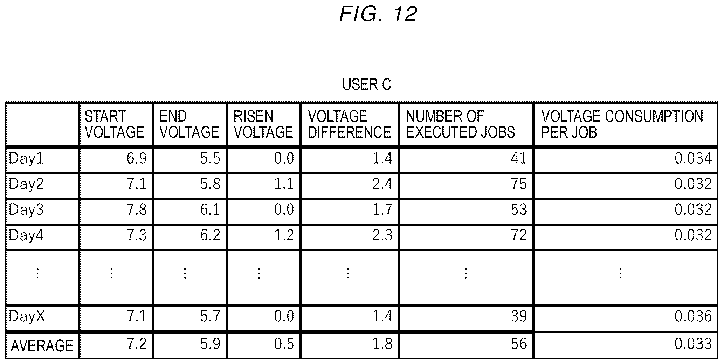

In the above embodiment, a case where the printer 100 is not charged from when the user logs in to the printer 100 until the user logs off has been described as an example. In the printing system, the printer 100 may be charged while the user is logging in. FIG. 12 is a diagram showing an example of a usage history list generated by a server according to a modification example. In FIG. 12, in addition to the items described in the above embodiment, a risen voltage is also stored in a usage history of the user C. The risen voltage is a value indicating how much the voltage of the battery 141 has risen while the user is logging in to the printer 100. When a voltage difference between a start voltage and an end voltage is calculated, the voltage difference taking a voltage rise due to charging into account can be calculated by adding the risen voltage to the voltage difference. In this manner, the above embodiment may be modified such that charging during login can be handled by storing the voltage rise due to charging. In this case, the server 300 receives the risen voltage from the printer 100 in addition to user information, the start voltage, the end voltage, and the number of executed jobs. The server 300 updates the usage history list based on the received information.

In the above embodiment, a case where the server 300 is connected to the external network 600 has been described as an example. Such a server 300 may be referred to as, for example, a cloud server. The server 300 may also be provided to be connected to the intracompany network 500. Such a server 300 may be referred to as, for example, an on-premises server.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. The accompanying claims and their equivalents are intended to cover such forms or modifications as would fall within the scope of the inventions.

## Claims

1. A server, comprising:

   a communication component configured to communicate with a printer;
   a storage component configured to store a first value which is the number of executed print jobs per day associated with a user, and a second value which is a battery voltage consumption per print job associated with the user; and
   a controller configured to receive a battery voltage of the printer via the communication component when the user logs in to the printer, predict a printable state of the printer based on the first value, the second value, and the battery voltage, and transmit a result of the prediction to the printer via the communication component.

2. The server according to claim 1, wherein the controller receives a usage status via the communication component when the user logs out from the printer, and updates the first value and the second value.

3. The server according to claim 1 or 2, wherein the controller receives the number of battery charge/discharge counts from the printer via the communication component when the result of the prediction indicates that printing is not possible, and transmits a message based on comparison between the number of battery charge/discharge counts and a threshold value to the printer via the communication component.

4. A method of operating a printer, the method comprising:

   storing a first value of a number of executed print jobs per day associated with a user, and a second value of a battery voltage consumption per print job associated with the user; and
   receiving a battery voltage of the printer when the user logs in to the printer, predicting a printable state of the printer based on the first value, the second value, and the battery voltage, and transmitting a result of the prediction to the printer.

5. The method according to claim 4, further comprising: receiving a usage status via the communication component when the user logs out from the printer, and updating the first value and the second value.

6. The method according to claim 5, further comprising: updating, as the first value, a maximum number of executed print jobs per day for a certain period for the user.

7. The method according to any of claims 4 to 6, further comprising:
   receiving the number of battery charge/discharge counts from the printer when the result of the prediction indicates that printing is not possible, and transmitting a message based on comparison between the number of battery charge/discharge counts and a threshold value to the printer.

8. The method according to any of claims 4 to 7, further comprising:
   storing a usage history list for each user, preferably wherein the usage history list comprises an average start voltage, an average end voltage, an average voltage difference, a number of executed print jobs, and an average voltage consumption per job.

9. A printing system comprising a plurality of printers, a plurality of user terminals, and at least one server, the server comprises:

   a communication component configured to communicate with the plurality of printers;
   a storage component configured to store a first value which is the number of executed print jobs per day associated with a user, and a second value which is a battery voltage consumption per print job associated with the user; and
   a controller configured to receive a battery voltage of a designated printer via the communication component when the user logs in to the designated printer, predict a printable state of the designated printer based on the first value, the second value, and the battery voltage, and transmit a result of the prediction to the designated printer via the communication component.

10. The printing system according to claim 9, wherein the controller receives a usage status via the communication component when the user logs out from the designated printer, and updates the first value and the second value.

11. The printing system according to claim 3 or 10, wherein the controller updates, as the first value, a maximum number of executed print jobs per day for a certain period for the user.

12. The printing system according to any of claims 9 to 11, wherein the controller receives the number of battery charge/discharge counts from the designated printer via the communication component when the result of the prediction indicates that printing is not possible, and transmits a message based on comparison between the number of battery charge/discharge counts and a threshold value to the designated printer via the communication component.

13. The printing system according to any of claims 1 to 3 and 9 to 12, wherein the storage component is further configured to store a usage history list for each user.

14. The printing system according to claim 1 to 3 and 9 to 13, wherein the usage history list comprises an average start voltage, an average end voltage, an average voltage difference, a number of executed print jobs, and an average voltage consumption per job.

15. The printing system according to any of claims 9 to 14, wherein at least one printer is a portable device with a built-in battery, or wherein each of the plurality of printers is a portable device with a built-in battery.

FIG. 1

FIG. 2

100

111 — PROCESSOR

120 — COMMUNICATION INTERFACE

112 — ROM

130 — USER INTERFACE
131 — DISPLAY
132 — INPUT UNIT

113 — RAM

114 — AUXILIARY STORAGE DEVICE

140 — POWER SUPPLY UNIT
141 — BATTERY
142 — VOLTMETER
143 — INPUT CONNECTOR

150 — IMAGE FORMING UNIT

160

*FIG. 3*

300

311 — PROCESSOR

312 — ROM

313 — RAM

314 — AUXILIARY STORAGE DEVICE

COMMUNICATION INTERFACE — 320

360

## FIG. 4

```
                    ┌─────────────┐
                    │    START    │
                    └──────┬──────┘
                           │
           ┌───────────────▼───────────────┐
           │    ACQUIRE BATTERY VOLTAGE AND  │╌ACT10
           │  TRANSMIT BATTERY VOLTAGE TO SERVER │
           └───────────────┬───────────────┘
                           │
           ┌───────────────▼───────────────┐
           │   DISPLAY LOGIN WAITING SCREEN  │╌ACT11
           └───────────────┬───────────────┘
```

ACT12

HAS USER LOGGED IN? — No

Yes

ACQUIRE BATTERY VOLTAGE AND STORE BATTERY VOLTAGE AS START VOLTAGE ╌ACT13

PRINTABLE STATE PREDICTION PROCESSING ╌ACT14

ACT15

HAS PRINTING JOB BEEN EXECUTED? — No

Yes

COUNT NUMBER OF EXECUTED JOBS ╌ACT16

ACT17

HAS USER LOGGED OUT? — No

Yes

ACQUIRE BATTERY VOLTAGE AND STORE BATTERY VOLTAGE AS END VOLTAGE ╌ACT18

TRANSMIT USER INFORMATION, START VOLTAGE, END VOLTAGE, AND NUMBER OF EXECUTED JOBS TO SERVER ╌ACT19

END

## FIG. 5

| PRINTER NAME | CURRENT VOLTAGE | FULL CHARGE DETERMINATION |
|---|---|---|
| PRINTER A | 7.5 | Yes |
| PRINTER B | 6.8 | No |
| PRINTER C | 7.8 | Yes |
| PRINTER D | 5.5 | No |
| ⋮ | ⋮ | ⋮ |

FIG. 6

USER A

| | START VOLTAGE | END VOLTAGE | VOLTAGE DIFFERENCE | NUMBER OF EXECUTED JOBS | VOLTAGE CONSUMPTION PER JOB |
|---|---|---|---|---|---|
| Day1 | 6.9 | 5.5 | 1.4 | 55 | 0.025 |
| Day2 | 7.1 | 5.8 | 1.3 | 48 | 0.027 |
| Day3 | 7.8 | 6.1 | 1.7 | 45 | 0.038 |
| Day4 | 7.3 | 6.2 | 1.1 | 56 | 0.020 |
| ⋮ | ⋮ | ⋮ | ⋮ | ⋮ | ⋮ |
| DayX | 7.1 | 5.7 | 1.4 | 49 | 0.029 |
| AVERAGE | 7.2 | 5.9 | 1.4 | 51 | 0.028 |

## FIG. 7

USER B

|  | START VOLTAGE | END VOLTAGE | VOLTAGE DIFFERENCE | NUMBER OF EXECUTED JOBS | VOLTAGE CONSUMPTION PER JOB |
|---|---|---|---|---|---|
| Day1 | 7.7 | 6.1 | 1.6 | 30 | 0.053 |
| Day2 | 7.8 | 6.3 | 1.5 | 25 | 0.060 |
| Day3 | 6.9 | 5.9 | 2.0 | 33 | 0.061 |
| Day4 | 7.2 | 6.2 | 2.0 | 23 | 0.087 |
| ⋮ | ⋮ | ⋮ | ⋮ | ⋮ | ⋮ |
| DayX | 7.5 | 5.7 | 1.8 | 29 | 0.062 |
| AVERAGE | 7.4 | 6.0 | 1.8 | 28 | 0.065 |

*FIG. 8*

```
         PRINTER                                              SERVER
            │                                                    │
            │ ┌─ACT20                                            │
    ┌───────┴────────────┐                                       │
    │ TRANSMIT START VOLTAGE │──────────────────────────────────▶│
    │  AND USER INFORMATION  │                                    │
    └───────┬────────────┘                                       │ ┌─ACT21
            │                              ┌─────────────────────┴──────────┐
            │                              │    ACQUIRE NUMBER OF            │
            │                              │ EXECUTED JOBS PER DAY AND       │
            │                              │ VOLTAGE CONSUMPTION PER JOB     │
            │                              └─────────────────────┬──────────┘
            │                                                    │ ┌─ACT22
            │                              ┌─────────────────────┴──────────┐
            │                              │   PREDICT PRINTABLE STATE       │
            │                              └─────────────────────┬──────────┘
            │                                                    │ ┌─ACT23
            │                              ┌─────────────────────┴──────────┐
            │◀─────────────────────────────│ TRANSMIT RESULT OF PREDICTION  │
            │ ┌─ACT24                       └─────────────────────┬──────────┘
    ┌───────┴────────────┐                                       │
    │ DISPLAY RESULT OF PREDICTION │                             │
    └───────┬────────────┘                                       │
            │ ┌─ACT25                                             │
```

DETERMINE WHETHER RESULT OF PREDICTION WAS BAD?

Yes

┌─ACT26

TRANSMIT NUMBER OF CHARGE/DISCHARGE COUNTS

┌─ACT27

BATTERY DETERMINATION PROCESSING

No

┌─ACT28

DISPLAY DETERMINATION RESULT

END

END

## FIG. 9

| USER | USER A |
|------|--------|
| CURRENT VOLTAGE | 7.5 |
| NUMBER OF PRINTABLE JOBS | 71 |
| AVERAGE NUMBER OF JOBS IN LAST X DAYS | 51 |
| MAXIMUM NUMBER OF JOBS EXECUTED IN LAST X DAYS | 56 |
| BATTERY DURATION DETERMINATION | Good |

FIG. 10

| USER | USER B |
|---|---|
| CURRENT VOLTAGE | 6.8 |
| NUMBER OF PRINTABLE JOBS | 20 |
| AVERAGE NUMBER OF JOBS IN LAST X DAYS | 28 |
| MAXIMUM NUMBER OF JOBS EXECUTED IN LAST X DAYS | 33 |
| BATTERY DURATION DETERMINATION | Bad |

*FIG. 11*

```
                          START

                                           ACT30
                    IS NUMBER
                OF CHARGE/DISCHARGE              Yes
            COUNTS EQUAL TO OR GREATER ─────────────────┐
                 THAN LIFE VALUE?                       │
                                                        ▼
                        No                    ┌──────────────────────┐
                                              │  TRANSMIT BATTERY LIFE │  ACT31
                        │                     │   MESSAGE TO PRINTER   │
                        │                     └──────────────────────┘
                        │                               │
                        │                               ▼
                        │                     ┌──────────────────────────┐
                        │                     │ TRANSMIT BATTERY LIFE MESSAGE │ ACT32
                        │                     │   TO SERVICE MAN TERMINAL   │
                        │                     └──────────────────────────┘
                        ▼                               │
                                    ACT33               │
              IS IT FULL CHARGE STATE?      Yes         │
                                        ──────────┐     │
                        No                        ▼     │
                        │              ┌──────────────────────┐      │
                        │              │  TRANSMIT SPARE BATTERY │ ACT34 │
                        │              │ BRINGING MESSAGE TO PRINTER │    │
                        │              └──────────────────────┘      │
                        ▼                         │                  │
              ┌──────────────────┐                │                  │
              │  SEARCH FOR FULLY │ ACT35          │                  │
              │  CHARGED PRINTER  │                │                  │
              └──────────────────┘                │                  │
                        │                          │                  │
                        ▼                          │                  │
              ┌──────────────────────┐             │                  │
              │ TRANSMIT NAME OF SEARCHED │ ACT36   │                  │
              │    PRINTER TO PRINTER    │          │                  │
              └──────────────────────┘             │                  │
                        │                          │                  │
                        ▼◄─────────────────────────┴──────────────────┘
                       END
```

## FIG. 12

USER C

| | START VOLTAGE | END VOLTAGE | RISEN VOLTAGE | VOLTAGE DIFFERENCE | NUMBER OF EXECUTED JOBS | VOLTAGE CONSUMPTION PER JOB |
|---|---|---|---|---|---|---|
| Day1 | 6.9 | 5.5 | 0.0 | 1.4 | 41 | 0.034 |
| Day2 | 7.1 | 5.8 | 1.1 | 2.4 | 75 | 0.032 |
| Day3 | 7.8 | 6.1 | 0.0 | 1.7 | 53 | 0.032 |
| Day4 | 7.3 | 6.2 | 1.2 | 2.3 | 72 | 0.032 |
| ⋮ | ⋮ | ⋮ | ⋮ | ⋮ | ⋮ | ⋮ |
| DayX | 7.1 | 5.7 | 0.0 | 1.4 | 39 | 0.036 |
| AVERAGE | 7.2 | 5.9 | 0.5 | 1.8 | 56 | 0.033 |

EP 4 660 776 A1

Europäisches
Patentamt

European
Patent Office

Office européen
des brevets

## EUROPEAN SEARCH REPORT

**Application Number**

EP 25 15 7569

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/042781 A1 (KOJIMA MICHITAKA [JP] ET AL) 8 February 2024 (2024-02-08)<br>* figures 6,11-12 *<br>* paragraphs [0055] - [0074] *<br>* paragraphs [0102] - [0113] *<br>----- | 1-15 | INV.<br>G06F3/12<br>B41J3/407<br><br>ADD.<br>G06F1/26 |
| A | EP 3 185 119 A1 (SEIKO EPSON CORP [JP]) 28 June 2017 (2017-06-28)<br>* figures 4-12 *<br>* paragraphs [0029] - [0106] *<br>----- | 1-15 | |
| A | US 2015/323974 A1 (SHUSTER GARY STEPHEN [US] ET AL) 12 November 2015 (2015-11-12)<br>* figures 1,2-6 *<br>* paragraphs [0033] - [0079] *<br>----- | 1-15 | |
| | | | **TECHNICAL FIELDS SEARCHED (IPC)**<br><br>B41J<br>G06F<br>G06Q |

The present search report has been drawn up for all claims

| Place of search | Date of completion of the search | Examiner |
|---|---|---|
| The Hague | 29 July 2025 | Vilella, Josep |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 7569

This annex lists the patent family members relating to the patent documents cited in  the above-mentioned European search report.
The members are as contained in the European Patent Office EDP file on
The European Patent Office is in no way liable for these particulars which are merely given for the purpose of information.

29-07-2025

| Patent document cited in search report | | Publication date | Patent family member(s) | | Publication date |
|---|---|---|---|---|---|
| US 2024042781 | A1 | 08-02-2024 | CN | 116568518 A | 08-08-2023 |
| | | | EP | 4299326 A1 | 03-01-2024 |
| | | | JP | 7664713 B2 | 18-04-2025 |
| | | | JP | 2022131050 A | 07-09-2022 |
| | | | US | 2024042781 A1 | 08-02-2024 |
| | | | WO | 2022180940 A1 | 01-09-2022 |
| EP 3185119 | A1 | 28-06-2017 | CN | 106915167 A | 04-07-2017 |
| | | | EP | 3185119 A1 | 28-06-2017 |
| | | | JP | 2017117305 A | 29-06-2017 |
| | | | US | 2017184684 A1 | 29-06-2017 |
| US 2015323974 | A1 | 12-11-2015 | US | 2015323974 A1 | 12-11-2015 |
| | | | US | 2018224915 A1 | 09-08-2018 |

EPO FORM P0459

For more details about this annex : see Official Journal of the European Patent Office, No. 12/82

**EP 4 660 776 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024093242 A